(19) Europäisches Patentamt / European Patent Office / Office européen des brevets

(11) EP 4 270 152 A1

(12) **EUROPEAN PATENT APPLICATION**

(43) Date of publication:
01.11.2023 Bulletin 2023/44

(21) Application number: 22170182.4

(22) Date of filing: 27.04.2022

(51) International Patent Classification (IPC):
**G06F 1/32** $^{(2019.01)}$     **G06F 1/26** $^{(2006.01)}$

(52) Cooperative Patent Classification (CPC):
**G06F 1/26; G06F 1/263; G06F 1/28; G06F 1/324; G06F 1/329; G06F 1/3296**

| | |
|---|---|
| (84) Designated Contracting States:<br>**AL AT BE BG CH CY CZ DE DK EE ES FI FR GB GR HR HU IE IS IT LI LT LU LV MC MK MT NL NO PL PT RO RS SE SI SK SM TR**<br>Designated Extension States:<br>**BA ME**<br>Designated Validation States:<br>**KH MA MD TN** | (71) Applicant: **DC Systems B.V.**<br>**1432 AH Aalsmeer (NL)**<br><br>(72) Inventor: **Stokman, Henricus David**<br>**1431 XP Aalsmeer (NL)**<br><br>(74) Representative: **Plasseraud IP**<br>**66, rue de la Chaussée d'Antin**<br>**75440 Paris Cedex 09 (FR)** |

(54) **COMPUTER POWER CONSUMPTION MANAGEMENT BASED ON THE STATE OF THE POWER SUPPLYING ELECTRICAL GRID**

(57)     A method of adapting the power consumption of a computer (102), which is supplied with power from a power bus (104) of an external electrical grid, to the power available from the power bus (104), wherein the computer (102) has a processor (106) configured for executing computing tasks, and wherein the power bus (104) is either an AC bus or a DC bus, the method comprising the following steps:

a. measuring the frequency F on the power bus (104) in case of an AC power bus, or the voltage U on the power bus (104) in case of a DC power bus, thus obtaining a power supply measurement (Ubus) indicative of the level of power supply from the power bus (104); and

b. adapting the processor's computing task execution based on the obtained power supply measurement (Ubus) to thus maintain, increase, or reduce the computer's power consumption.

FIG. 1

EP 4 270 152 A1

**Description**

**Technical Field**

This disclosure generally pertains to the field of electricity supply for digital electronic computers. More specifically, the focus is on matching the electrical power consumed by a digital electronic computer with the electrical power available to the computer from an external power source.

One important application of the present disclosure is to the management of server loads in data centres.

**Background Art**

The article "Towards green data center microgrids by leveraging data center loads in providing frequency regulation" by W. Qi et al., published in 2019 in Scientia Iranica D, 26(6), pp. 3559-3570, proposes a load control strategy for data centre microgrids. In this control strategy, flexibilities of the data centre's computing servers in processing delay-tolerant tasks are leveraged to control the data centre's power consumption and thus regulate the AC power frequency of the data centre microgrid.

The control strategy is explained in section 3 of the article, starting on page 3564, and illustrated by the article's Fig. 7: the AC power frequency at the point of common coupling of the data centre microgrid is constantly monitored, and, if the frequency drops too much below a reference frequency, computing servers in the data centre are switched off to reduce the load on the microgrid.

The sole aim of this known data centre power management scheme is to keep the AC power supply frequency within a corridor around the normal operating frequency (e.g., 60 Hz). This is to ensure the stability and security of the whole microgrid.

A drawback of this scheme is its considerable negative impact on the performance of the data centre's computing servers. Indeed, each time there is a power shortage, whole server clusters are shut down.

**Summary**

In view of the above, it is an object of the present disclosure to provide an improved method of adapting the power consumption of computers, and in particular of servers, in electrical grids to the varying power supply levels in the electrical grid.

According to the present disclosure, this object is achieved with a method of adapting the electrical power consumption of a digital electronic computer, which is supplied with electrical power from a power bus of an external electrical grid, to the instantaneous electrical power available from the power bus, wherein the digital electronic computer has a processing unit, the processing unit being configured for executing computing tasks, and wherein the power bus is either an AC bus providing AC electrical power at an electrical frequency F, or a DC bus providing DC electrical power at an electrical voltage U, the method comprising the following steps: a. measuring the instantaneous electrical frequency F on the power bus in case of an AC power bus, or the instantaneous electrical voltage U on the power bus in case of a DC power bus, thus obtaining a power supply measurement indicative of the instantaneous level of power supply from the power bus, and b. adapting the processing unit's computing task execution based on the obtained power supply measurement to thus maintain, increase, or reduce the computer's electrical power consumption.

In other words, the way the computer's processing unit executes tasks is made dependent on the current power state of the external electrical grid. Depending on the power available from the external electrical grid, the processing unit will perform more or less tasks, execute tasks more slowly, or execute tasks more quickly. Accordingly, the IT load on the electrical grid can be adapted much more precisely and dynamically. In particular, the IT load can be modified in small increments by increasing or reducing the task execution of the processing unit.

In contrast to the control strategy of the above-mentioned article, the method of the present disclosure follows a bottom-up approach. In the case of a data centre grid, according to the present disclosure, each computing server does its own individual and independent load management. In other words, the load controlling task is distributed over all the different computing servers.

According to the present disclosure, it is the individual computer that monitors the health of the external electrical grid and that adapts its consumption accordingly. If there is plenty of power available from the electrical grid, the computer will run its processing unit at maximum capacity. On the other hand, if there is a power shortage on the electrical grid, the computer will throttle its processing unit down.

The following features can be optionally implemented, separately or in combination one with the others:

- step b includes the following step b1: if the power supply measurement falls below a predetermined throttling threshold associated with one or more tasks currently executed by the processing unit, less of the processing unit's resources are allocated to the associated one or more tasks to reduce the processing unit's power consumption;

- in step b1, the allocation of less resources increases linearly as the power supply measurement continues to decrease below the predetermined throttling threshold;

- in step b, if the power supply measurement falls to a predetermined lower ending threshold associated with one or more tasks currently executed by the processing unit, the associated one or more tasks are ended;

- after step a and prior to step b, the step of deriving a power supply level indicator, which indicates the instantaneous level of the power supply from the power bus, from the obtained power supply measurement, and wherein, in step b, the derived power supply level indicator is used as a reference to adapt the computing task execution of the processing unit;

- step b includes the following step b1: if the power supply level indicator falls below a predetermined throttling threshold associated with one or more tasks currently executed by the processing unit, less of the processing unit's resources are allocated to the associated one or more tasks to reduce the processing unit's power consumption;

- in step b1, the allocation of less resources increases linearly as the power supply level indicator continues to decrease below the predetermined throttling threshold;

- in step b, if the power supply level indicator falls to a predetermined lower ending threshold associated with one or more tasks currently executed by the processing unit, the associated one or more tasks are ended;

- the digital electronic computer includes a task manager for managing the computing tasks executed by the processing unit, and step b is at least partly performed by the task manager;

- the power bus is a DC bus, the power supply chain of the digital electronic computer includes a DC power supply unit, an input side of the DC power supply unit is electrically connected to the DC power bus, a voltage sensor is arranged at the input side of the DC power supply unit, and the voltage sensor is adapted for carrying out step a of the method.

The present disclosure also relates to a method of managing electrical power consumption in a data centre, the data centre including a plurality of computing servers and a power bus supplying electrical power to the computing servers, wherein the electrical power consumption of each computing server is adapted in accordance with the method as detailed above.

Optionally, in this power consumption managing method, step a is implemented as a central measurement operation, and the obtained power supply measurement is transmitted to each computing server to be used as a basis for the adaptation of the computing server's electrical power consumption.

**Brief Description of Drawings**

Preferred embodiments of the present disclosure will now be described in detail with reference to the appended drawings, wherein:

**Fig. 1**

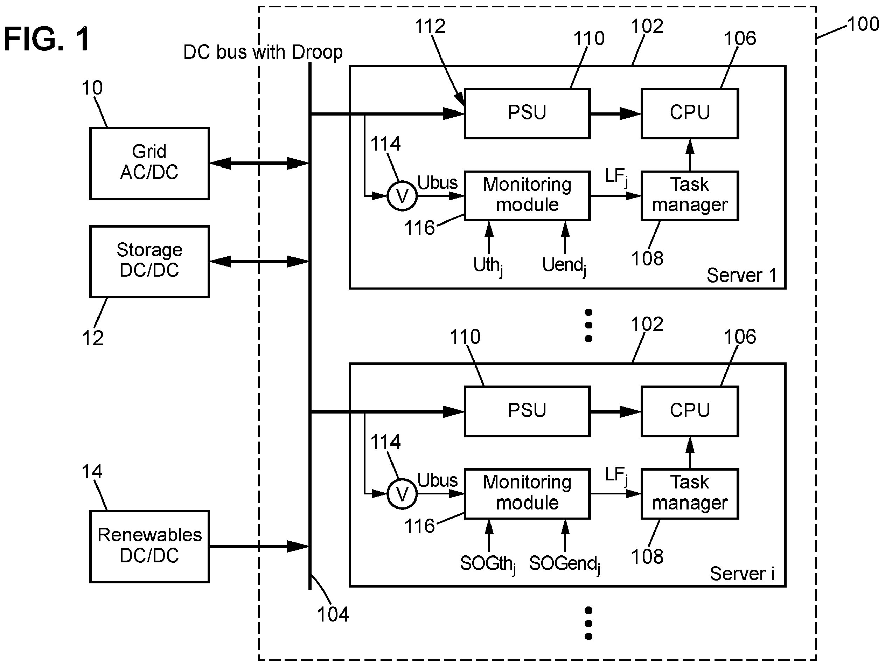

[Fig. 1] is a block diagram of a first data centre and its associated power sources according to the present disclosure.

**Fig. 2**

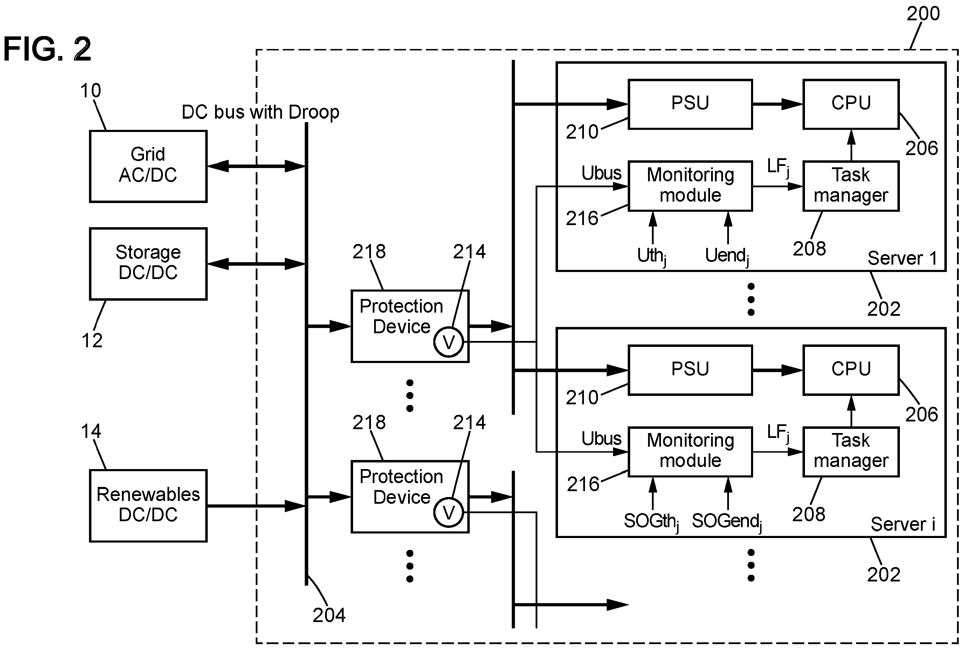

[Fig. 2] is a block diagram of a second data centre and its associated power sources according to the present disclosure.

**Fig. 3**

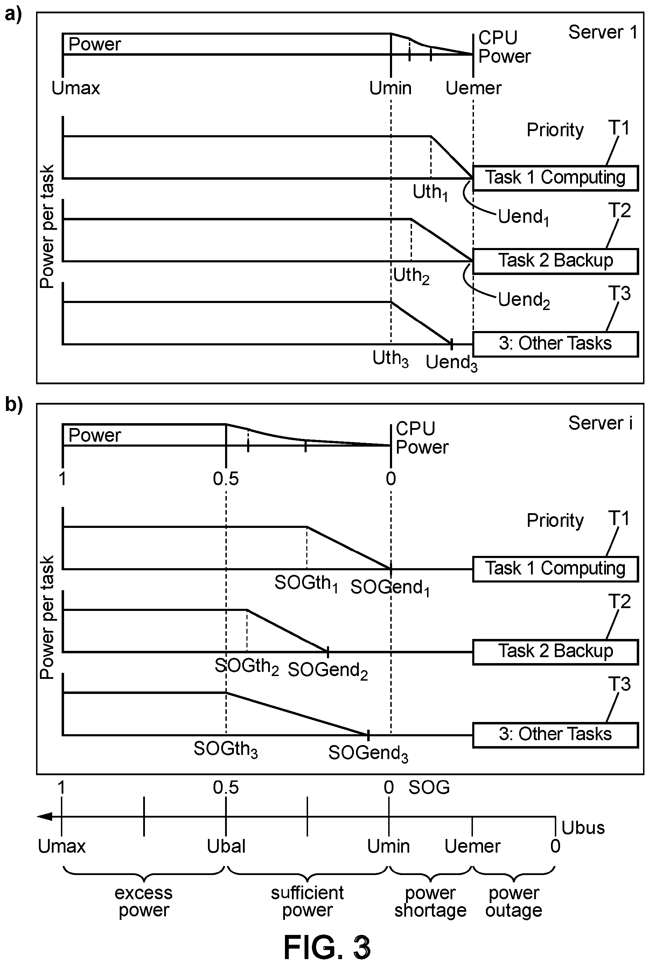

[Fig. 3] shows two sets of power curves illustrating how, according to the present disclosure, the electrical power consumption of the CPU of a computing server located in a data centre is adapted.

**Description of Embodiments**

Figure 1 shows a first data centre 100 according to the present disclosure.

Typically, datacentre 100 is an IT installation, which provides IT services such as data storage, data processing and computing to paying customers.

Datacentre 100 includes a plurality of computing servers 102 and a power bus 104, which supplies electrical power to the computing servers 102. The computing servers 102 handle the different IT services.

Only two servers, labelled "Server 1" and "Server i", are shown in figure 1, but in practice datacentre 100 may contain thousands of servers 102.

The servers 102 are all digital electronic computers. As such, each server 102 comprises a processing unit 106.

Typically, the processing unit 106 is the server's central processing unit or CPU. However, it may also be a graphical processing unit (GPU), or another type of processing unit.

The processing unit 106 executes various computing tasks under the control of a task manager 108, which is also part of the server 102.

The task manager 108 manages the computing tasks executed by the processing unit 106. In particular, the task manager 108 may allocate new tasks to the processing unit 106, may end the execution of tasks by the processing unit 106, or may change the allocation of the processing unit's resources to the various tasks. By doing so, task manager 108 may speed up or slow down the execution of specific tasks. The task manager 108 may be implemented in the server 102 as a hardware and/or software module.

In the present example, each server 102 also comprises a DC power supply unit or PSU 110. The PSU 110 is a DC-to-DC converter, which converts the higher electrical voltage of the DC bus 104 to the lower electrical voltage needed by the server 102. As shown in figure 1, the PSU 110 provides power to the processing unit 106, and also to other components of the server 102.

An input side 112 of the PSU 110 is electrically connected to the DC power bus 104.

A voltage sensor 114 is arranged at the input side 112 of the PSU 110. Here, the voltage sensor 114 is part of the server 102. However, alternatively, both the PSU 110 and the voltage sensor 114 may be located outside the server 102. In this case, the PSU 110 may be implemented as a separate device between the DC power bus 104 and the server 102.

Each server 102 also includes a monitoring module 116. The monitoring module 116 may be implemented as hardware, for example, in the form of a logic circuit, or as a software module.

The monitoring module 116 receives as an input a voltage measurement Ubus, which is output by the voltage sensor 114.

The output of the monitoring module 116 is a set of load factors $LF_j$, which are sent to the task manager 108. The role of the monitoring module 116 is to constantly monitor the evolution of the voltage Ubus on the DC bus 104 and to tell the task manager 108 via the load factors $LF_j$ when and how to throttle down the various tasks carried out by the CPU 106.

In the present example, the electrical power available from the power bus 104 is provided by three different power sources 10, 12 and 14. Power source 10 corresponds to the public AC electricity network. Power source 12 is an electrical battery. Power source 14 is a renewable energy source such as a solar panel array.

As apparent from figure 1, the power sources 10, 12 and 14, the DC bus 104 and the respective power supply unit 110 together form a power supply chain for each server 102 of the data centre 100.

As seen from the servers 102, the DC power bus 104 and the power sources 10, 12 and 14 together form an external electrical grid, and the servers 102 are connected thereto.

The electrical systems shown in figures 1 and 2 are direct current (DC) systems. However, the present disclosure equally applies to comparable alternating current systems, wherein the power bus 104/204 is an alternating current (AC) bus, and the voltage sensors 114/214 are replaced by frequency sensors that measure the instantaneous electrical frequency on the AC power bus.

With reference to figures 1 and 3, we will now describe how, according to the present disclosure, the electrical power consumption of the servers 102 is adapted as a function of the electrical power available from the DC power bus 104.

In the exemplary method illustrated by figures 1 and 3, the general control strategy is to throttle down the task execution by the CPUs 106 when there is a power shortage on the DC bus 104. This has a stabilising effect on the bus voltage Ubus and helps to reduce imbalances between the power drawn by the datacentre 100 and the power generated by the power sources 10, 12 and 14.

The amount of power available from the DC power bus 104 correlates with the electrical voltage Ubus on the power bus. The higher the voltage Ubus, the higher the available power. Conversely, if the bus voltage Ubus is low, then there is not much power available from the DC power bus 104.

A droop control ensures that the voltage Ubus on the DC power bus 104 remains between an upper limit U maximum (Umax) and a lower limit U emergency (Uemer). This voltage corridor is illustrated by the voltage scale at the bottom of figure 3. The bus voltage Ubus must not fall below the emergency voltage Uemer prevent a power outage in the data centre 100. The bus voltage Ubus also must not be higher than the maximum voltage Umax to prevent a power flood, which might damage the installations in the data centre 100.

Inside the voltage corridor delimited by Umax and Uemer there are two intermediate voltages U balance (Ubal) and U minimum (Umin). The voltage Ubal is the optimum voltage for the DC power bus 104. At this voltage, there is a balance between the power generated by the power sources 10, 12 and 14 and the power consumed by the data centre 100. The minimum voltage Umin is a lower limit above the critical lower limit Uemer. When the bus voltage Ubus falls below the minimum voltage Umin but is still above the critical voltage Uemer there is a power shortage on the DC power bus 104. This should be avoided, but the data centre 100 can still operate in limited power mode. If the bus voltage Ubus falls below the critical limit Uemer the power shortage becomes a power outage and installations in the data centre 100 will start shutting down uncontrollably. Accordingly, the electrical system shown in figure 1, which includes the power sources 10, 12 and 14, the DC power bus 104 and the servers 102 should be controlled in such a way as to maintain the bus voltage Ubus between Umax and Umin. Exceptionally, the bus voltage Ubus may fall below Umin, but it must not fall below Uemer.

In the embodiment of figures 1 and 3, each server 102 has a voltage sensor 114 so that it can constantly monitor the bus voltage and thus the power level on the DC power bus 104. If the bus voltage falls below the optimum voltage Ubal this will be noticed by each server 102. Each server may then start to slow down the task execution by its CPU 106 to stabilise the bus voltage Ubus. On the other hand, if the bus voltage Ubus exceeds Ubal, then each server 102 may speed up the task execution by its CPU 106 and/or assign additional tasks to its CPU 106.

In other words, the voltage sensors 114 measure the instantaneous electrical voltage Ubus on the power bus 104 and thus obtain a power supply measurement indicative of the instantaneous level of power supply from the power bus 104. Subsequently, the computing task execution of each processing unit 106 is adapted based on the obtained power supply measurement Ubus to thus maintain, increase, or reduce the servers' electrical power consumption.

More precisely, in each task manager 108, the tasks executed by the associated CPU 106 are ranked according to priority. With reference to figure 3, the CPU of the first server "Server 1" and the CPU of the ith server "Server i" may each run a first task T1 labelled "Task 1", which is a computing task, and which has highest priority, a second task T2 labelled "Task 2", which is a backup task and has the second highest priority, and a set of other tasks T3, which have the lowest priority.

We will now first focus on the task throttling strategy implemented in Server 1. This strategy is illustrated by figure 3a.

The uppermost graph in figure 3a shows how the power consumption of the CPU varies as a function of the bus voltage Ubus measured by the voltage sensor 114. One can see that, between Umax and Umin, the CPU runs at full power. However, if the bus voltage Ubus falls below Umin, the CPU is throttled down linearly. If the bus voltage Ubus falls to the emergency voltage Uemer then the CPU is switched off completely.

The throttling down of the CPU between Umin and Uemer is a combined result of the throttling down of the computing task T1, the backup task T2 and the other tasks T3.

The task throttling is implemented as follows: two voltage thresholds $Uth_j$ and $Uend_j$ are associated with each task or group of tasks j with the same priority. The first voltage threshold $Uth_j$, called a throttling threshold, is the voltage below which the task or group of tasks j is throttled down. The second lower voltage threshold $Uend_j$, called an ending threshold, is the voltage at which the task or group of tasks j is ended. If the power supply measurement Ubus falls below the throttling threshold $Uth_j$ less of the processing unit's resources are allocated to the associated task or group of tasks j to reduce the processing unit's power consumption. Preferably, as can be seen in figure 3a, the allocation of resources to the task or group of tasks j decreases linearly as the power supply measurement Ubus continues to decrease below the throttling threshold $Uth_j$.

If the power supply measurement Ubus falls to the lower ending threshold Uendj the associated task or group of tasks is ended.

For each task or group of tasks j the two thresholds $Uth_j$ and $Uend_j$ are provided as input parameters to the monitoring module 116 (cf. figure 1). Based on the two input parameters $Uth_j$ and $Uend_j$, as well as the bus voltage measurement Ubus, the monitoring module 116 calculates a load factor $LF_j$ for each task or group of tasks j. The monitoring module 116 sends the calculated load factors $LF_j$ to the task manager 108. Each load factor $LF_j$ is a number between 1 and 0. Alternatively, the load factors $LF_j$ may also be provided as percentage values between 100 and 0%. The task manager 108 instructs its CPU 106 to reduce the processing load of the task or group of tasks j by a factor which is given by the corresponding load factor $LF_j$. For example, if the load factor is 0.5 or 50% the corresponding task or group of tasks is run by the CPU 106 at half the normal load.

For each task or group of tasks j, the corresponding load factor $LF_j$ may be calculated with the following two equations:

$$LF_j = 1, \text{ if } Ubus \geq Uth_j \qquad (1)$$

$$LF_j = 1 - (Uth_j - Ubus)/(Uth_j - Uend_j), \text{ if } Ubus < Uth_j \qquad (2)$$

According to the above equations, the load factor is equal to 1 if the voltage on the DC power bus 104 is greater than or equal to the throttling voltage $Uth_j$. This means that, as long as the bus voltage Ubus is above the throttling voltage of the corresponding task, the task runs at hundred percent.

However, if the voltage Ubus on the DC power bus 104 falls below the throttling voltage $Uth_j$, then the load factor $LF_j$ falls below one. According to equation (2) above, the load factor $LF_j$ decreases linearly from 1 to 0 as the voltage Ubus on the DC power bus 104 drops from the throttling voltage $Uth_j$ to the ending voltage Uendj. The linear rate of decrease of the load factor $LF_j$ depends on the difference between the throttling voltage $Uth_j$ and the ending voltage Uendj. The closer the throttling voltage $Uth_j$ to the ending voltage Uendj, the higher the rate of decrease of the load factor $LF_j$. The value of the throttling voltage $Uth_j$, of the ending voltage $Uend_j$ and thus the difference between the two will be chosen in accordance with the priority of the corresponding task or group of tasks j. This is illustrated by figure 3a: task T1 with the highest priority has an ending voltage $Uend_1$ which is equal to the emergency voltage Uemer, and its throttling voltage $Uth_1$ is close to the ending voltage $Uend_1$.

Task T2 with lower priority has the same ending voltage as task T1. However, the difference between the throttling voltage $Uth_2$ and the ending voltage $Uend_2$ is larger so that task T2 will be throttled down earlier than task T1. The other tasks T3 with the lowest priority have an ending voltage $Uend_3$, which is higher than the ending voltage of tasks T1 and T2. Furthermore, the throttling voltage $Uth_3$ of the other tasks T3 is the highest and set at the minimum voltage Umin.

In the just described strategy to control the power consumption of the servers 102 the calculation of the load factors $LF_j$ is directly based on the voltage measurements Ubus provided by the voltage sensors 114. However, alternatively, as described in detail below, instead of directly using the voltage measurement for the load factor calculation, one may also first derive a power supply level indicator SOG from the power supply measurement Ubus and then calculate the load factors using the derived power supply level indicator SOG.

As used here, the indicator SOG indicates the instantaneous level of the power supply from the power bus 104. The indicator SOG is a proxy for the state of the external electrical grid, hence the acronym SOG, which stands for State Of the Grid.

The following equation is an example of how the indicator SOG may be calculated:

$$SOG = (Ubus - Umin)/(Umax - Umin) \qquad (3)$$

According to equation (3), SOG is a linear function of the bus voltage Ubus. Also according to equation (3), the indicator SOG will be a number between 0 and 1 since the bus voltage Ubus can only vary between the upper limit Umax and the lower limit Umin.

In equation (3) above, Umin may be replaced by Uemer in a setup where the bus voltage Ubus may be allowed to drop as low as the emergency voltage Uemer.

Using the above defined SOG indicator has the advantage that the amount of power currently available from the power bus 104 can be directly ascertained from the indicator. Indeed, if the SOG indicator is close to 0 then there is very little power available. If the SOG indicator is close to 1 then there is plenty of power available. Estimating the available power from the voltage measurement Ubus is less straightforward since it requires knowledge about the operating parameters of the DC bus 104, namely Umax and Umin.

When using the power supply level indicator SOG, the two thresholds for each task or group of tasks j are indicator thresholds and not voltage thresholds. Each task or group of tasks j then has a throttling threshold $SOGth_j$ and an ending threshold SOGendj.

Equations (1) and (2) above then become:

$$LF_j = 1, \text{ if } SOG \geq SOGth_j \qquad (4)$$

$$LF_j = 1 - (SOGth_j - SOG)/(SOGth_j - SOGend_j), \text{ if } SOG < SOGth_j \qquad (5)$$

Task throttling based on the indicator SOG is illustrated by the graphs of figure 3b.

Figure 3b illustrates the task throttling strategy implemented in server i whereas figure 3a illustrates the task throttling strategy implemented in server 1. Comparing the two, one can see that in server i all tasks are terminated when the indicator SOG is equal to 0, i.e., when the bus voltage has dropped to Umin. In server 1 however, tasks with high priority such as tasks T1 and T2 may still run to some extent until the bus voltage has dropped to the emergency voltage Uemer, which is lower than Umin.

The task throttling strategy shown in figure 3a may be applied in a server which is rented by a premium client, i.e., a client of the data centre who pays a premium price, so that its computing tasks keep running, even if the data centre 100 suffers a power shortage.

The task throttling strategy of figure 3b may be applied in a server rented by a standard client.

With reference to figure 2, the electrical power consumption management method of the present disclosure may also be applied to a data centre 200, which is equipped with protection devices 218. The protection devices 218 are arranged between the DC power bus 204 and the servers 202. The protection devices 218 are electrical, electromechanical, or electronic components which interrupt the power supply to the associated servers 202 in case of a fault in the electrical grid, such as a short circuit.

In the data centre 200, the voltage sensors 214, which measure the voltage on the DC bus 204, are in the protection devices 218. Accordingly, in the data centre 200, the bus voltage Ubus is measured centrally at each protection device 218, and the obtained power supply measurements Ubus are transmitted to each computing server 202 to be used as a basis for the adaptation of the computing servers' electrical power consumption.

In the data centre 200, since the voltage measurements are transmitted from a central location 218 to the individual servers 202, it is possible to make the power management even more versatile. For example, it is possible to transmit a virtual voltage value to one of the servers 202 instead of the real bus voltage Ubus. This virtual voltage value may, for example, be equal to Umax and may be transmitted to a high priority server. Accordingly, the server will keep on running at full load, even if the real bus voltage Ubus is low.

In a further variant, each server 202 may have its own associated local voltage sensor (as shown in figure 1) in addition to the central voltage sensors 214. These additional local voltage sensors can act as a backup if the transmission of the voltage measurements from the central voltage sensors 214 fails.

The above description and the figures relate to data centres equipped with a DC power bus. However, the present disclosure is equally applicable to data centres with AC power buses. In this case, it is the instantaneous electrical frequency F of the AC bus that is measured instead of the voltage. The measured electrical frequency F is used as a proxy for the electrical power available from the AC power bus and the task execution of the CPUs of the servers is adapted based on the frequency measurements.

**Claims**

1. A method of adapting the electrical power consumption of a digital electronic computer (102), which is supplied with electrical power from a power bus (104) of an external electrical grid, to the instantaneous electrical power available from the power bus (104),

   wherein the digital electronic computer (102) has a processing unit (106), the processing unit (106) being configured for executing computing tasks (T1-T3), and
   wherein the power bus (104) is either an AC bus providing AC electrical power at an electrical frequency F, or a DC bus providing DC electrical power at an electrical voltage U,
   the method comprising the following steps:

   a. measuring the instantaneous electrical frequency F on the power bus (104) in case of an AC power bus, or the instantaneous electrical voltage U on the power bus (104) in case of a DC power bus, thus obtaining a power supply measurement (Ubus) indicative of the instantaneous level of power supply from the power bus (104); and
   b. adapting the processing unit's computing task execution based on the obtained power supply measurement (Ubus) to thus maintain, increase, or reduce the computer's electrical power consumption.

2. The method according to the preceding claim, wherein step b includes the following step:
   b1. if the power supply measurement (Ubus) falls below a predetermined throttling threshold ($Uth_j$) associated with one or more tasks (T1-T3) currently executed by the processing unit (106), less of the processing unit's resources are allocated to the associated one or more tasks (T1-T3) to reduce the processing unit's power consumption.

3. The method according to the preceding claim, wherein, in step b1, the allocation of less resources increases linearly as the power supply measurement (Ubus) continues to decrease below the predetermined throttling threshold ($Uth_j$).

4. The method according to any one of the preceding claims, wherein, in step b, if the power supply measurement (Ubus) falls to a predetermined lower ending threshold (Uendj) associated with one or more tasks (T1-T3) currently executed by the processing unit (106), the associated one or more tasks (T1-T3) are ended.

5. The method according to claim 1, further comprising, after step a and prior to step b, the step of deriving a power supply level indicator (SOG), which indicates the instantaneous level of the power supply from the power bus (104), from the obtained power supply measurement (Ubus), and wherein, in step b, the derived power supply level indicator (SOG) is used as a reference to adapt the computing task execution of the processing unit (106).

6. The method according to the preceding claim, wherein step b includes the following step:
b1. if the power supply level indicator (SOG) falls below a predetermined throttling threshold ($SOGth_j$) associated with one or more tasks (T1-T3) currently executed by the processing unit (106), less of the processing unit's resources are allocated to the associated one or more tasks (T1-T3) to reduce the processing unit's power consumption.

7. The method according to the preceding claim, wherein, in step b1, the allocation of less resources increases linearly as the power supply level indicator (SOG) continues to decrease below the predetermined throttling threshold ($SOGth_j$).

8. The method according to any one of claims 5 to 7, wherein, in step b, if the power supply level indicator (SOG) falls to a predetermined lower ending threshold (SOGendj) associated with one or more tasks (T1-T3) currently executed by the processing unit (106), the associated one or more tasks (T1-T3) are ended.

9. The method according to any one of the preceding claims, wherein the digital electronic computer (102) includes a task manager (108) for managing the computing tasks (T1-T3) executed by the processing unit (106), and wherein step b is at least partly performed by the task manager (108).

10. The method according to any one of the preceding claims, wherein:

   - the power bus (104) is a DC bus;
   - the power supply chain of the digital electronic computer (102) includes a DC power supply unit (110), an input side (112) of the DC power supply unit (110) being electrically connected to the DC power bus (104);
   - a voltage sensor (114) is arranged at the input side (112) of the DC power supply unit (110); and
   - the voltage sensor (114) is adapted for carrying out step a of the method.

11. A method of managing electrical power consumption in a data centre (100), the data centre (100) including a plurality of computing servers (102) and a power bus (104) supplying electrical power to the computing servers (102), wherein the electrical power consumption of each computing server (102) is adapted in accordance with the method of any one of the previous claims.

12. The method according to the preceding claim, wherein step a is implemented as a central measurement operation, and wherein the obtained power supply measurement (Ubus) is transmitted to each computing server (202) to be used as a basis for the adaptation of the computing server's electrical power consumption.

# FIG. 1

**FIG. 1**

EP 4 270 152 A1

FIG. 2

**a)**

Power | CPU Power | Server 1

Umax | Umin | Uemer

Power per task

Priority | T1

Task 1 Computing

$Uth_1$ | $Uend_1$ | T2

Task 2 Backup

$Uth_2$ | $Uend_2$ | T3

$Uth_3$ | $Uend_3$ | 3: Other Tasks

**b)**

Power | CPU Power | Server i

1 | 0.5 | 0

Power per task

Priority | T1

Task 1 Computing

$SOGth_1$ | $SOGend_1$ | T2

Task 2 Backup

$SOGth_2$ | $SOGend_2$ | T3

$SOGth_3$ | $SOGend_3$ | 3: Other Tasks

1 | 0.5 | 0 SOG

Ubus

Umax | Ubal | Umin | Uemer | 0

excess power | sufficient power | power shortage | power outage

# FIG. 3

Europäisches
Patentamt

European
Patent Office

Office européen
des brevets

# EUROPEAN SEARCH REPORT

Application Number

EP 22 17 0182

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2015/089255 A1 (JURSKI JANUSZ [US] ET AL) 26 March 2015 (2015-03-26) * paragraphs [0001], [0002], [0016] – [0047]; figures 1-6 * ----- | 1-12 | INV. G06F1/32 G06F1/26 |
| A | US 2021/116982 A1 (KHANNA RAHUL [US] ET AL) 22 April 2021 (2021-04-22) * paragraphs [0071] – [0078] * ----- | 1-12 | |

TECHNICAL FIELDS
SEARCHED (IPC)

G06F

The present search report has been drawn up for all claims

| Place of search | Date of completion of the search | Examiner |
|---|---|---|
| The Hague | 14 October 2022 | Arranz, José |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons
.........................................................................................................
& : member of the same patent family, corresponding
document

EPO FORM 1503 03.82 (P04C01)

**EP 4 270 152 A1**

## ANNEX TO THE EUROPEAN SEARCH REPORT
## ON EUROPEAN PATENT APPLICATION NO.

EP 22 17 0182

This annex lists the patent family members relating to the patent documents cited in the above-mentioned European search report.
The members are as contained in the European Patent Office EDP file on
The European Patent Office is in no way liable for these particulars which are merely given for the purpose of information.

14-10-2022

| Patent document cited in search report | | Publication date | Patent family member(s) | | Publication date |
|---|---|---|---|---|---|
| US 2015089255 | A1 | 26-03-2015 | CN | 104516478 A | 15-04-2015 |
| | | | TW | 201527948 A | 16-07-2015 |
| | | | US | 2015089255 A1 | 26-03-2015 |
| US 2021116982 | A1 | 22-04-2021 | EP | 4020128 A1 | 29-06-2022 |
| | | | US | 2021116982 A1 | 22-04-2021 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **W. QI et al.** Towards green data center microgrids by leveraging data center loads in providing frequency regulation. *Scientia Iranica D,* 2019, vol. 26 (6), 3559-3570